# EUROPÄISCHE PATENTANMELDUNG

(11) **EP 2 325 621 A1**
(43) Veröffentlichungstag der Anmeldung: **25.05.2011**
(21) Anmeldenummer: 10191741.7
(22) Anmeldetag: 18.11.2010
(51) Int. Cl.: G01N 17/02

(54) **Korrosionssonde**

(30) Priorität: 18.11.2009 DE 102009053719
(71) Anmelder: Technische Universität Darmstadt, 64287 Darmstadt (DE)
(72) Erfinder: Zorbach, Ingo, 55128, Mainz (DE); Epple, Prof. Dr. Bernd, 64395, Brensbach (DE); Wieczorek, Michael, 63512, Hainburg (DE)
(74) Vertreter: Rüger, Barthelt & Abel Patentanwälte

(57) **Zusammenfassung**

Erfindungsgemäß besteht die Korrosionssonde (1) aus zwei Teilen, nämlich dem Korrosionssensor (4) und der Lanze (10). Der Korrosionssensor (4) besteht aus Elektroden und einem Elektrodenträger in Gestalt des Sensorkopfs. Die Elektroden haben eine vorzugsweise ebene Kreissektorform und sind an der Spitze der Lanze (10) angebracht. Die Elektroden (12) sind durch Keramikröhrchen oder eine sonstige Ummantelung und Keramikkleber voneinander und von dem Elektrodenträger isoliert. Die Lanze (10) besteht aus drei konzentrischen Rohren mit innen liegendem Kühlkörper zur Erhöhung der inneren Oberfläche. Die Temperatur wird über einen Temperatursensor gemessen und über die Kühlmittelmenge geregelt.

## Beschreibung

Die Erfindung betrifft eine Korrosionssonde, insbesondere für Dampfkesselanlagen oder auch andere Anlagen, bei denen Einrichtungen und Elemente einer Hochtemperaturkorrosion unterliegen.

An Kraftwerkskesseln oder ähnlichen Einrichtungen tritt beispielsweise an den Verdampferrohren eine rauchgasinduzierte Hochtemperaturkorrosion auf. Häufig wird angestrebt, die Korrosion und auch die Korrosionsrate bestimmen zu können. Die Messwerte sollen in das Kraftwerkleitsystem eingebunden werden, um durch geeignete Maßnahmen Einfluss auf die Korrosion der Verdampferrohre nehmen zu können. Beispielsweise kann zur Prozessführung bei Dampferzeugern beispielsweise der Luftüberschuss oder -unterschuss im wandnahen Bereich reguliert werden.

Aus WO 94/12862 ist ein Korrosionssensor zur Bestimmung der Korrosion in Hochtemperaturprozessen bekannt. Der Korrosionssensor weist eine Mehrzahl von Elektroden auf, die aus demselben Material bestehen, wie die des zu durch die Korrosion angegriffenen Prozessbauteils des überwachten Prozess. Über ein Wärmeübertragungselement werden die Elektroden auf eine Temperatur gebracht, die der Temperatur des Prozessbauteils entspricht.

Davon ausgehend war es Aufgabe der Erfindung, einen verbesserten Korrosionssensor zu schaffen. Der Korrosionssensor soll auch auf lange Sicht verlässliche Messwerte liefern, um die vorhandene Korrosion einschätzen zu können.

Diese Aufgabe wird mit der Korrosionssonde nach Anspruch 1 gelöst:

Die erfindungsgemäße Korrosionssonde weist einen Korrosionssensor auf, der mit einer Temperiereinrichtung versehen ist. Die Temperiereinrichtung dient zum vorzugsweise temperaturgeregelten Kühlen des Korrosionssensors und der Kabel mit denen der Sensor an eine Messelektronik angeschlossen ist. Der Korrosionssensor weist mehrere plattenförmige Elektroden auf, die in einer gemeinsamen Ebene angeordnet sind und insbesondere abgesehen von verbleibenden Spalten im Wesentlichen eine Kreisfläche bilden. Durch das Anordnen der Elektroden in einer gemeinsamen Ebene kann eine Platz sparende Korrosionssonde erreicht werden, was sich vorteilhaft auf die Messung auswirkt, z.B. in der Brennkammer eines Verdampfers. Der Korrosionssonde muss nur wenig in den Raum hinein ragen, in dem die Messung erfolgt, da alle Elektroden in derselben Ebene angeordnet sind. Außerdem kann der Korrosionssensor nahe an einer Wand, zum Beispiel an einer Brennkammerwand angeordnet werden. Es ist dabei auch möglich, die Dicke der plattenförmigen Elektroden an die Wanddicke des auf Korrosion zu überwachenden Bauteils, zum Beispiel eine Brennkammerwand oder eine Rohrwand, anzupassen. Dadurch lassen sich gute Korrosionsmesswerte erhalten.

Mit der erfindungsgemäßen Korrosionssonde lassen sich gleichzeitig drei wesentliche Punkte zur Messung der Korrosionsrate berücksichtigen: a) sowohl der Korrosionssensor als auch das überwachte Element, beispielsweise das Verdampferrohr eines Verdampfers, bestehen aus demselben Werkstoff, b) sie haben annähernd die gleiche Temperatur und c) sie sind nahezu am gleichen Ort eingebaut. So lassen sich repräsentative Messwerte erzielen. Um dies zu gewährleisten, kann der Korrosionssensor an der Spitze einer entsprechenden Lanze eingebaut sein. Die Lanze kann dazu dienen, den Sensor in den Feuerraum eines Dampferzeugers einzubringen und temperaturgeregelt zu kühlen. So kann beispielsweise die Wandkorrosion an dem Dampferzeuger bestimmt werden.

Die Korrosionsrate kann elektrochemisch durch Messung des linearen Polarisationswiderstands (LPR) bestimmt werden. Dazu eingerichtete Messelektronik ist kommerziell verfügbar. Jedoch macht erst die Erfindung der vorliegenden Korrosionssonde Sensoren verfügbar, die für die Erfassung von Hochtemperaturkorrosion bei Temperaturen von beispielsweise mehr als 250°C geeignet sind.

Die Temperiereinrichtung der Korrosionssonde weist vorzugsweise Kühlkanäle für flüssiges oder gasförmiges, d.h. ein fluides Kühlmittel auf. Vorzugsweise wird zur Kühlung Wasser verwendet.

Vorzugsweise ist eine Temperaturegeleinrichtung zur Regelung der Temperatur des Korrosionssensors vorgesehen. Zu der Temperaturregeleinrichtung gehören vorzugsweise mindestens ein Temperatursensor und ein Element, mit dem sich die Kühlwirkung des Kühlmittels regulieren lässt. Ein solches Element ist beispielsweise eine Kühlmittelpumpe, die den Kühlmittelstrom fördert, ein Kühlmittelventil, das den Kühlmittelstrom reguliert, oder Ähnliches. Die Temperaturregelung arbeitet vorzugsweise kontinuierlich. Sie kann auch als Zwei- oder Mehrpunktregler ausgebildet sein.

Vorzugsweise ist die Temperiereinrichtung als längliche Lanze aufgebaut, wie zum Beispiel aus mehreren zueinander konzentrischen Rohren besteht. Diese dienen dazu, Kühlmittel an den Temperatursensor heranzuführen. Vorzugsweise wird der Wärmeaustausch zwischen dem Korrosionssensor und dem Kühlmittel durch einen geeigneten, im Kühlmittelstrom befindlichen Kühlkörper erhöht.

Es wird als vorteilhaft angesehen, wenn die Lanze zueinander konzentrische ringförmige Kühlmittelkanäle aufweist, von denen zum Beispiel einer dazu dient, Kühlmittel an den Korrosionssensor heranzuführen, während der andere dazu dient, Kühlmittel abzuführen. Dabei können die zu- und abführenden Kühlmittelkanäle in Wärmeaustausch miteinander stehen. Damit lassen sich die Kühlwasseraustrittstemperaturen deutlich unter kritischen Grenzwerten, beispielsweise deutlich unterhalb von 80°C halten. Spontanes Sieden des Kühlwassers durch Druckabsenkung in Kühlwasserdrosselventil wird dadurch ausgeschlossen.

Weitere Einzelheiten vorteilhafter Details und Ausführungsformen der Erfindung sind Gegenstand von Unteransprüchen und der Beschreibung. Die Zeichnung und das Fachwissen des Durchschnittsfachmanns ergänzen die Beschreibung. Es zeigen:
- Figur 1: eine erfindungsgemäße Korrosionssonde an ei- ner Ofenwand, in schematischer Darstellung,
- Figur 2: die Korrosionssonde nach Figur 1, in Prin- zipdarstellung,
- Figur 3: die Korrosionssonde, in einer vereinfachten Stirnansicht,
- Figur 4: die Korrosionssonde mit Korrosionssensor und Temperiereinrichtung, in einer Explosions- darstellung in Seitenansicht,
- Figur 5, 6 und 7,: den Korrosionssensor, in Rückan-
- Figur 8: sicht, Seitenansicht und Schnittdarstellung, den Korrosionssensor, in Explosionsdarstel- lung,
- Figur 9, 10 und 11: die Temperiereinrichtung, in Sei- tenansicht, Längsschnittdarstellung und ei- ner Detaildarstellung ihres Kühlkopfes,
- Figur 12: das entgegen gesetzte Ende der Temperierein- richtung, in Längsschnittdarstellung,
- Figur 13: den vorderen Teil der Temperiereinrichtung, im Querschnitt - hier die radiale Zentrie- rung des Mittelrohrs, und
- Figur 14: den vorderen Teil der Temperiereinrichtung, im Querschnitt - hier die Schrauben zur Fi- xierung des Sensors.

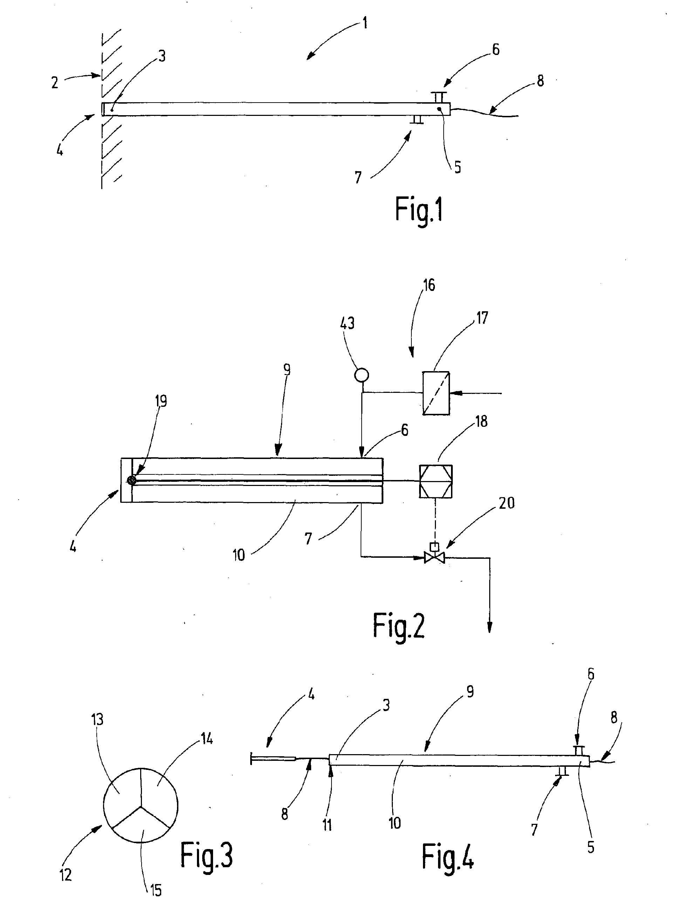

Figur 1 veranschaulicht eine Korrosionssonde 1 zur Messung der Hochtemperaturkorrosion an einer technischen Einrichtung, wie beispielsweise einer Rohrwand 2, die den Gaszug eines Großdampferzeugers begrenzt. Die Rohrwand 2 besteht aus einer Anzahl nicht weiter veranschaulichter einzelner Rohre, die innen von Wasser, einem Wasser/DampfGemisch oder auch Wasser in überkritischem Zustand durchströmt sind. Die Rohrwand 2 erreicht Oberflächentemperaturen, die weit über 250°C liegen. Die Rohre stehen unter einem erheblichen Betriebsdruck von beispielsweise deutlich über 100 bar. Es muss sichergestellt werden, dass die Korrosion während des Betriebs des Dampferzeugers nicht zu einer zu starken Schädigung der Rohrwand 2 führt, um teuere Reparaturen und Unfälle zu vermeiden.

Die Korrosionssonde 1 ist vorzugsweise im Wesentlichen stabförmig ausgebildet. An einem ersten Ende 3 ist stirnseitig ein Korrosionssensor 4 angeordnet. Dieser nimmt vorzugsweise die gesamte Stirnfläche der Korrosionssonde 1 ein.

Das gegenüberliegende Ende 5 der Korrosionssonde 1 ist außerhalb des von der Rohrwand 2 umschlossenen Ofenraums angeordnet. Hier können ein erster Anschluss 6 und ein zweiter Anschluss 7 zur Zu- und Abführung von Kühlmittel vorgesehen sowie Messleitungen 8 herausgeführt sein.

Die Korrosionssonde 1 umfasst, wie insbesondere Figur 4 erkennen lässt, eine dem Korrosionssensor 4 zugeordnete Temperiereinrichtung 9, die als länglicher Hohlzylinder ausgebildet ist, der auch Lanze 10 bezeichnet wird. An ihrer dem Korrosionssensor 4 zugewandten Ende 3 weist die Lanze 10 einen Lanzenkopf 11 auf, der in innigem Temperaturaustausch mit den Korrosionssensor 4 steht.

Der Korrosionssensor 4 umfasst mehrere, beispielsweise zwei oder wie es bevorzugt wird, drei Elektroden 12, z.B. eine Arbeitselektrode 13, eine Referenzelektrode 14 und eine Gegenelektrode 15. Die Anordnung der Elektroden 12 ist in Figur 3 veranschaulicht. Sie können beispielsweise als Kreissektoren bzw. Kreisausschnitte und/oder Kreissegmente und/oder Kreisringsektoren und/oder Kreisringsegmente und/oder Kreisabschnitte oder dergleichen ausgebildet sein. Vorzugsweise bedecken die Elektroden 12 gemeinsam die kreisförmige Stirnfläche des Korrosionssensors 4, bis auf Trennfugen, vollständig.

Die Temperiereinrichtung 9, d.h. die Lanze 10 ist über die Anschlüsse 6 und 7 an ein Kühlsystem 16 angeschlossen, wie es aus Figur 2 ersichtlich ist. Zu dem Kühlsystem 16 gehört zum Beispiel ein Schwebstofffilter 17, über den der Kühlmittelstrom einen der Anschlüsse beispielsweise dem Anschluss 6 zugeführt wird. Ein Temperaturregler 18 dient dazu, die mittels eines Temperatursensors 19 an dem Korrosionssensor 4 gemessene Temperatur zu erfassen und auf einen Sollwert auszuregeln. Dazu ist der Temperaturregler 18 mit einem Drosselventil 20 verbunden, um dieses dementsprechend zu steuern. Mit dem Drosselventil 20 ist der sich durch die Lanze 10 erstreckende Kühlmittelstrom regulierbar. Der Temperaturregler 18 stellt dadurch an den Korrosionssensor 4 eine gewünschte Temperatur ein.

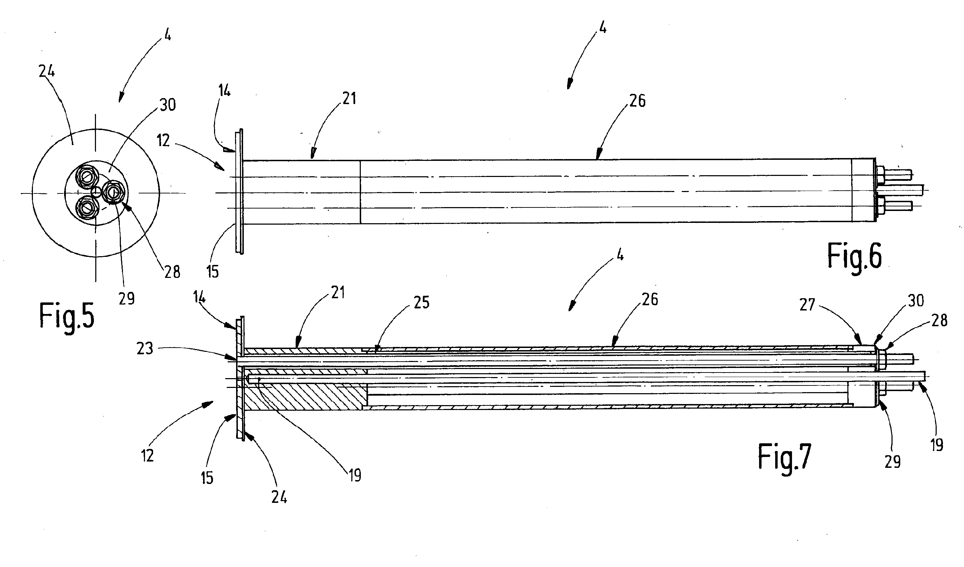

Der Aufbau des Korrosionssensors 4 geht aus den figuren 5 bis 8 hervor:

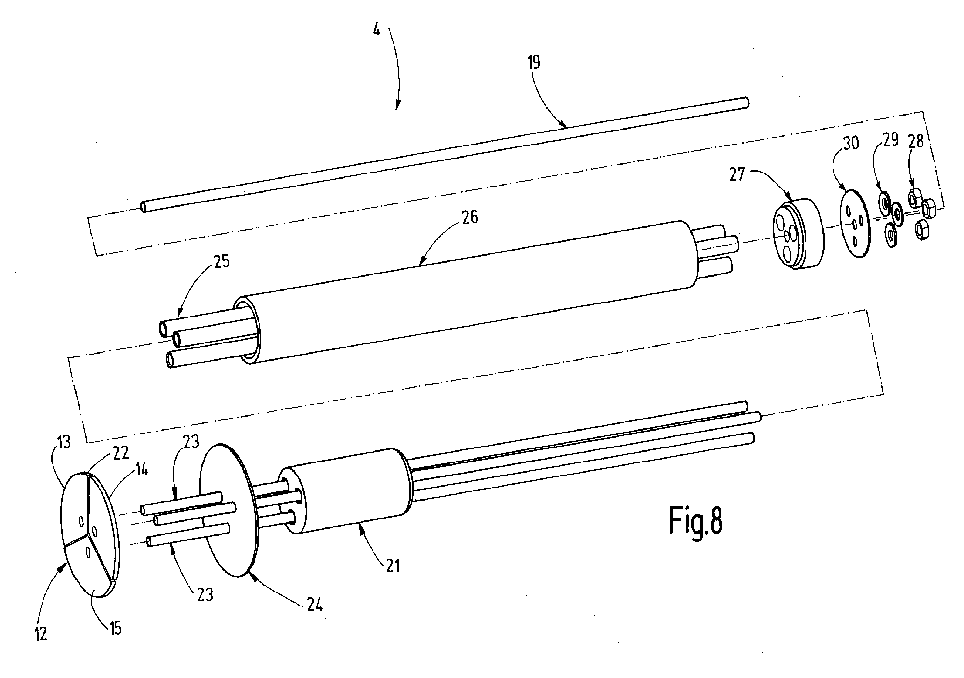

Der Korrosionssensor 4 weist einen Sensorkopf 21 auf, der als zylindrischer Körper vorzugsweise aus einem gut wärmeleitfähigen Metall aufgebaut ist. An seiner ofenseitigen Stirnfläche sind die Elektroden 12 angeordnet. Die Elektroden 12 sind vorzugsweise ebene Platten, d.h. flach ausgebildet und beispielsweise 2 mm dick. Sie haben zum Beispiel die Form von Kreissektoren mit einem Winkel von 120°. Zusammen bilden sie eine Kreisfläche mit einem Außendurchmesser von zum Beispiel 50 mm. Zwischen den Elektroden 12 ist, wie insbesondere Figur 8 erkennen lässt, ein geeigneter Spalt 22, von zum Beispiel 1 mm Breite ausgebildet, um die Arbeitselektrode 13, die Referenzelektrode 14 und die Gegenelektrode 15 voneinander zu trennen.

Die Elektroden 12 sind vorzugsweise an als Stifte oder Stangen ausgebildete Sensorleitungen 23 angeschlossen, zum Beispiel angeschweißt. Die Sensorleitungen 23 bestehen vorzugsweise aus dem gleichen Material wie die Elektroden 12, die wiederum vorzugsweise aus dem gleichen Material bestehen, wie das zu überwachende Element, beispielsweise die Rohrwand 2.

Die Elektroden 12 sind elektrisch voneinander sowie von dem Sensorkopf 21 isoliert. Dazu dient beispielsweise eine Keramikschicht 24, die zwischen dem Sensorkopf 21 und den Elektroden 22 angeordnet ist. Die Keramikschicht 24 kann als dünne Keramikplatte ausgebildet sein, die mit Keramikkleber sowohl mit dem Sensorkopf 21 als auch mit den Elektroden 12 verklebt ist. Sie kann alternativ auch allein durch Keramikkleber gebildet sein. Der Keramikkleber füllt vorzugsweise auch den Spalt 22. Die sich durch den Sensorkopf 21 hindurch erstreckenden Sensorleitungen 23 sind mit einer temperaturfesten, elektrisch isolierenden Ummantelung 25, beispielsweise in Gestalt von Keramikrohren versehen. Der Temperatursensor 19 ist vorzugsweise mittig in eine entsprechende axiale Sackbohrung des Sensorkopfs 21 eingesetzt. Der Sensorkopf 21 ist vorzugsweise über ein Verbindungsrohr 26 mit einem Abschlussdeckel 27 verbunden. Das Verbindungsrohr 26 sitzt dabei vorzugsweise auf entsprechenden Absätzen des Sensorkopfs 21 und des Abschlussdeckels 27. Der Abschlussdeckel 27 kann aus Metall oder einem geeigneten Isolator, wie beispielsweise Keramik, bestehen. Endseitig sind die Sensorleitungen 23 vorzugsweise mit einem Gewinde versehen, auf denen die Muttern 28 sitzen. Zwischen den Muttern 28 sowie gegebenenfalls vorhandenen Unterlegscheiben 29 und im Abschlussdeckel 27 kann zur elektrischen Isolation ein Keramikvlies 30 vorgesehen sein. Besteht der Abschlussdeckel 27 aus einem keramischen Material, kann dieses entfallen.

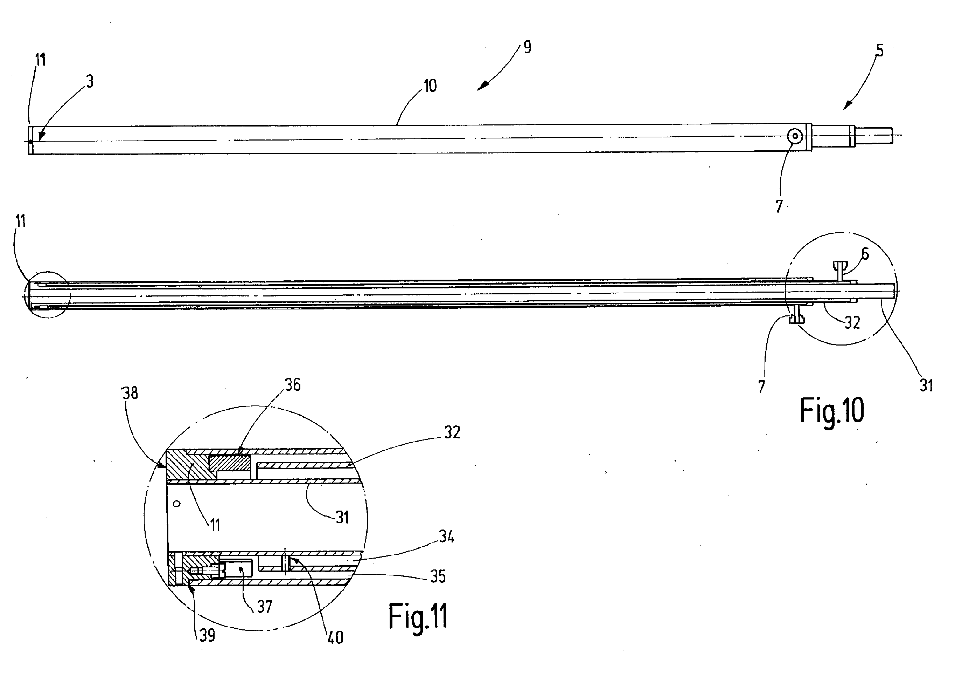

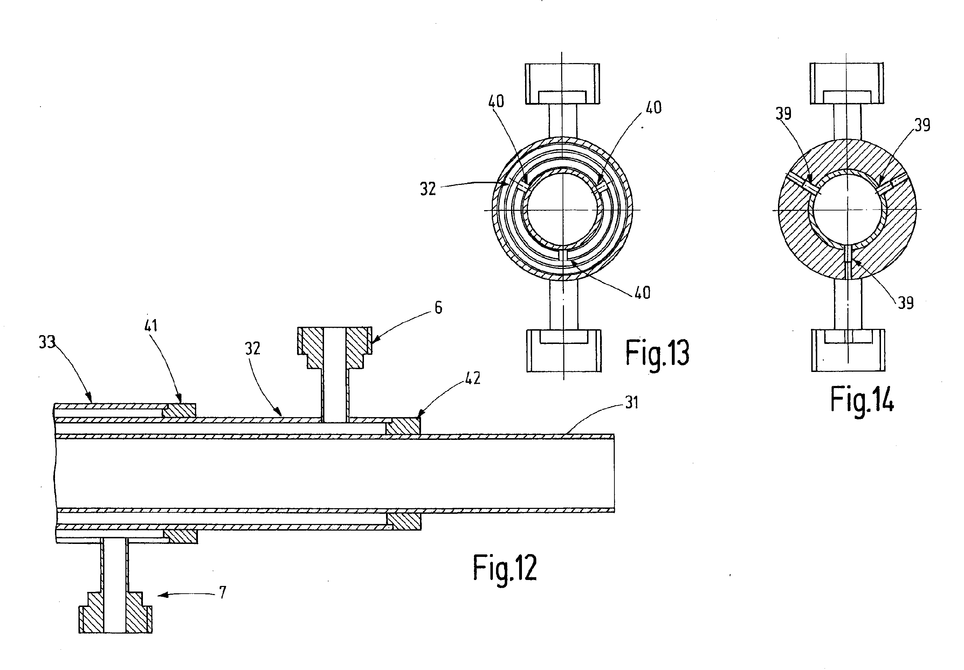

Die Figuren 9 bis 14 zeigen die Temperiereinrichtung 9 bzw. die Lanze 10. Sie ist als langer Hohlstab ausgebildet und durch den Lanzenkopf 11 abgeschlossen, wie es insbesondere aus Figur 11 ersichtlich ist. Der Lanzenkopf 11 ist vorzugsweise durch ein ringförmiges, aus einem gut wärmeleitfähigen Material bestehendes Element gebildet. Er dient der Kühlung des Korrosionssensors 4. Durch die Kühlung wird die Temperatur der Elektroden 12 an die Temperatur der Rohrwand 2 angeglichen. Die Lanze 10 besteht aus drei konzentrisch zueinander angeordneten Rohren, nämlich einem Innenrohr 31, einem Mittelrohr 32 und einem Außenrohr 33. Zwischen den drei Rohren befinden sich zwei Ringspalte 34, 35, durch die das Kühlwasser von dem Ende 5 der Lanze zu deren Spitze, d.h. zu dem Ende 3 und zurück geleitet wird. Vorzugsweise ist der erste Anschluss 6, der Eingangsanschluss und der zweite Anschluss 7 der Ausgangsanschluss. Durch den Ringspalt 34 wird der Lanzenkopf 11 mit Kühlwasser angeströmt.

Der Lanzenkopf 11 empfängt die Wärme von dem Korrosionssensor 4 über seine ebene ringförmige Stirnfläche 38. Zur Verbesserung des Wärmeübergangs von dem Lanzenkopf 11 auf das Kühlwasser kann der Lanzenkopf 11 mit einem vorzugsweisen ringförmigen Kühlkörper 36 verbunden, beispielsweise verschraubt sein. Der Kühlkörper 36 weist eine Anzahl von Flossen oder Zähnen 37 auf, die sich in den Kühlmittelstrom hinein erstrecken und den Wärmeübergang verbessern. Der Kühlkörper 36 ist vorzugsweise aus Kupfer ausgebildet und stellt sicher, dass ein ausreichend hoher Wärmestrom von dem Lanzenkopf 11 abgeführt werden kann. Der Kühlkörper 36 besteht somit aus einem Ringr, vorzugsweise Kupferring mit Kühlrippen. Die Länge und die Anzahl der Kühlrippen hängen von der abzuführenden Wärmemenge ab. Er dient der Vergrößerung der inneren Oberfläche der Lanze 10. Er ermöglicht die Abführung von genügend Wärme. Er kann mit drei oder mehreren axial orientieren Schrauben an dem Lanzenkopf 11 gehalten sein. Andere Verbindungsmöglichkeiten wie Verlöten mit dem Lanzenkopf 11 oder dergleichen sind möglich. Im Falle der Verschraubung wird zwischen dem Kühlkörper 36 und dem Lanzenkopf 11 vorteilhafterweise eine Schicht Wärmeleitpaste vorgesehen. Der Kühlkörper 36 ist bei der bevorzugten Ausführungsform konzentrisch zur Längsachse der Korrosionssonde 1 und insbesondere konzentrisch zu der Lanze 10 bzw. zu den Rohren 31, 32, 33 angeordnet.

Der Lanzenkopf 11 und der Kühlkörper 36 können auch durch ein einstückiges Teil gebildet sein, z.B. wen die Kühlrippen aus dem Lanzenkopf herausgearbeitet werden.

Zur Fixierung und Zentrierung des Korrosionssensors 4 in dem Innenrohr 31 sind radial in den Lanzenkopf 11 eingeschraubte Gewindestifte 39 vorgesehen.

Im Gebrauchszustand ist der Korrosionssensor 4 in den Lanzenkopf 11 eingesteckt und darin fixiert. Zur Verbindung kann ein Klebstoff dienen, der zwischen der Stirnfläche 38 und den Elektroden 12 oder der Keramikschicht 24 angeordnet ist. Der Kleber dient gleichzeitig der Wärmeübergang von dem Korrosionssensor 4 auf den Lanzenkopf 11 und der elektrischen Isolation. Er verhindert einen elektrischen Kurzschluss der Elektroden 12, indem er diese von dem Lanzenkopf 11 isoliert. Die Dicke der Kleberschicht wird vor dem Einbau des Sensors berechnet und vorzugsweise auf genau 0,1 mm eingestellt. Abweichende Maße und Anordnungen sind möglich.

Der Lanzenkopf 11 ist vorzugsweise mit dem Innenrohr 31 verschweißt. Das Innenrohr 31 ist das längste von den drei Rohren 31, 32, 33. Zur Zentrierung des sensorseitigen Endes des Mittelrohrs 32 dienen mehrere, vorzugsweise drei, radial eingeschweißte Stifte 40. An dem gegenüber liegenden, hinten liegenden Ende 5 sind das Innenrohr 31, das Mittelrohr 32 und das Außenrohr 33 hingegen durch entsprechende Abschlussringe 41, 42 zueinander zentriert und stirnseitig abgedichtet. Der innere Abschlussring 42 ist mit dem Mittelrohr verschweißt, verschraubt, verklebt oder anderweitig dauerhaft verbunden. Mit dem Innenrohr 31 ist der innere Abschlussring 42 ebenfalls dicht und dauerhaft verbunden, beispielsweise verklebt, verschweißt der dergleichen.

Der äußere Abschlussring 41 ist mit dem Außenrohr 33 dicht und dauerhaft verbunden, beispielsweise verklebt, verschweißt verschraubt oder dergleichen. Ebenso ist der äußere Abschlussring 41 mit dem Mittelrohr dauerhaft abdichtend verbunden, beispielsweise verschraubt, verschweißt oder dergleichen.

Die Gesamtlänge der Lanze 10 kann in weitem Rahmen variiert werden. Bei einer Änderung der Gesamtlänge der Lanze ändert sich an den Rohrlängendifferenzen zwischen dem Innenrohr 31, dem Mittelrohr 32 und dem Außenrohr 33 nichts. Der Kühlwasserzulauf befindet sich vorzugsweise auf dem Mittelrohr 32 während der Rücklauf vorzugsweise an oder auf dem Außenrohr 33 sitzt.

Die insoweit beschriebene Korrosionssonde 1 arbeitet wie folgt:

In Betrieb sitzt der Korrosionssensor 4 beispielsweise an einer Kesselwand, zum Beispiel der Rohrwand 2. Wegen der übereinstimmenden Materialien der Rohrwand 2 und der Elektroden 12 sind die Elektroden 12 dem gleichen korrosiven Angriff ausgesetzt wie die Rohrwand 2. Der Korrosionszustand wird elektrisch durch Bestimmung des linearen Polarisationswiderstands mithilfe der Arbeitselektrode 13, der Referenzelektrode 14 und der Gegenelektrode 15 bestimmt. Dazu sind entsprechende Messleitungen an die Sensorleitungen 23 angeschlossen. Die elektrische Messung liefert Aussagen über den Polarisationswiderstand und somit über den Korrosionszustand.

Die Korrosion der Elektroden 12 stimmt mit der Korrosion der Rohrwand 2 weitgehend überein, wenn die Temperiereinrichtung 9 ordnungsgemäß betrieben wird. Diese dient dazu, die Elektroden 12 auf einer gewünschten Temperatur zu halten, die z.B. im Wesentlichen mit der Temperatur der Rohrwand 2 übereinstimmt. Dazu werden die Elektroden 12 durch einen Kühlmittelsrom fortwährend gekühlt, der über den ersten Anschluss 6 zu und über den zweiten Anschluss 7 abgeleitet wird. Zwar erfasst der Temperatursensor 19 nicht unmittelbar die Oberflächentemperatur der Elektroden 12, jedoch findet die Temperaturmessung in unmittelbarer Nähe der Elektroden 12 in dem Sensorkopf 21 statt. Der Temperatursensor 19 (beispielsweise ein Thermoelement) befindet sich dabei ca. 2 mm unterhalb der Elektroden 12. Durch den Einbauort zeigt das Thermoelement aufgrund des thermischen Gradienten zwar eigentliche eine zu niedrige Temperatur an. Jedoch kann die Temperaturdifferenz zwischen der Oberfläche der Elektroden 12 und des Temperatursensors berücksichtigt werden. Beispielsweise kann über die Kenntnis der Wärmestromdichte in dem Lanzenkopf 11 der Temperaturgradient berechnet und damit die von dem Temperatursensor 19 erfasste Temperatur auf die Oberflächentemperatur der Elektroden 12 umgerechnet werden.

Der Temperaturregler 18 regelt die Temperatur des Lanzenkopfs 11 über die Veränderung der Kühlwassermenge. Der Temperaturregler 18 (Prozessregler) steuert dazu das vorzugsweise als Proportionalventil ausgebildete Drosselventil 20 so, dass die zur Temperierung des Korrosionssensors 4 erforderliche Wärmeabfuhr vorgenommen wird. Das Kühlwasser strömt dabei zuerst durch den Schwebstofffilter 17 und einen gegebenenfalls vorhandenen Durchflussmesser 43 bevor es in die Lanze 10 strömt. Das Kühlwasser durchströmt die Lanze 10 und anschließend das Drosselventil 20. Dieser Aufbau bewirkt, dass sich das Kühlwasser innerhalb der Lanze 10 noch annähernd auf den Druck der speisenden Leitung befindet und somit Dampfbildung und Sieden des Wassers in der Lanze 10 vermieden bzw. gemindert wird. Außerdem kann der Umstand genutzt werden, dass sich die Lanze 10 in ihrem Aufbau für das Kühlwasser wie ein Gegenstromwärmetauscher verhält. Das ausströmende warme Wasser wird durch das einströmende kalte Wasser gekühlt. Die Austrittstemperatur kann damit deutlich unterhalb 80°C liegen. Spontanes Sieden des Kühlwassers nach dem Passieren des Drosselventils 20 kann somit vermieden werden.

Erfindungsgemäß besteht die Korrosionssonde 1 aus zwei Teilen, nämlich dem Korrosionssensor 4 und der Lanze 10. Der Korrosionssensor 4 besteht aus Elektroden 12 und einem Elektrodenträger in Gestalt des Sensorkopfs 21. Die Elektroden haben eine vorzugsweise ebene Kreissektorform und sind an der Spitze der Lanze 10 angebracht. Die Elektroden 12 sind durch Keramikröhrchen oder eine sonstige Ummantelung 25 und Keramikkleber voneinander und von dem Elektrodenträger isoliert. Die Lanze 10 besteht aus drei konzentrischen Rohren 31, 32, 33 mit innen liegendem Kühlkörper 36 zur Erhöhung der inneren Oberfläche. Die Temperatur wird über einen Temperatursensor 19 gemessen und über die Kühlmittelmenge geregelt.

### Bezugszeichen

- 1: Korrosionssonde
- 2: Rohrwand
- 3: Ende
- 4: Korrosionssensor
- 5: Ende
- 6: erster Anschluss
- 7: zweiter Anschluss
- 8: Messleitungen
- 9: Temperiereinrichtung
- 10: Lanze
- 11: Lanzenkopf
- 12: Elektroden
- 13: Arbeitselektrode
- 14: Referenzelektrode
- 15: Gegenelektrode
- 16: Kühlsystem
- 17: Schwebstofffilter
- 18: Temperaturregler
- 19: Temperatursensor
- 20: Drosselventil
- 21: Sensorkopf
- 22: Spalt
- 23: Sensorleitungen
- 24: Keramikschicht
- 25: Ummantelung
- 26: Verbindungsrohr
- 27: Abschlussdeckel
- 28: Muttern
- 29: Unterlegscheiben
- 30: Keramikvlies
- 31: Innenrohr
- 32: Mittelrohr
- 33: Außenrohr
- 34: innerer Ringspalt
- 35: äußerer Ringspalt
- 36: Kühlkörper
- 37: Zähne
- 38: Stirnfläche
- 39: Gewindestifte
- 40: Stifte
- 41: äußerer Abschlussring
- 42: innerer Abschlussring

## Patentansprüche

1. Korrosionssonde (1), insbesondere für Dampfkesselanlagen,
mit einem Korrosionssensor (4), der mehrere Elektroden (12) aufweist, die mit einem korrosiven Medium in Kontakt zu bringen sind, zur elektrochemischen Messung der Korrosionsrate,
wobei die Elektroden (12) des Korrosionssensors (4) als ebene Platten ausgebildet sind, die nebeneinander in einer gemeinsamen Ebene angeordnet sind,
mit Temperiereinrichtung (9) zur gezielten Beeinflussung der Betriebstemperatur der Elektroden (12).

2. Korrosionssonde nach Anspruch 1, **dadurch gekennzeichnet, dass** die Temperiereinrichtung (9) Kühlkanäle (34, 35) für ein fluides Kühlmittel aufweist.

3. Korrosionssonde nach Anspruch 1, **dadurch gekennzeichnet, dass** die Temperiereinrichtung (9) eine Temperaturregeleinrichtung (18) aufweist.

4. Korrosionssonde nach Anspruch 1, **dadurch gekennzeichnet, dass** die Temperaturregeleinrichtung (18) an ein Stellmittel (20) angeschlossen ist, mit dem der Kühlmittelstrom in der Sonde (10) einstellbar ist.

5. Korrosionssonde nach Anspruch 1, **dadurch gekennzeichnet, dass** die Temperaturregeleinrichtung (9) auf die Temperatur einer hinsichtlich der Korrosion zu überwachenden Einrichtung (2) eingestellt ist.

6. Korrosionssonde nach Anspruch 1, **dadurch gekennzeichnet, dass** die Temperiereinrichtung einen Temperatursensor (19) umfasst, der thermisch mit dem Korrosionssensor (4) verbunden ist.

7. Korrosionssonde nach Anspruch 1, **dadurch gekennzeichnet, dass** sie als längliche Lanze (10) aufgebaut ist, wobei der Korrosionssensor (4) an einem Ende der Lanze (10) angeordnet ist.

8. Korrosionssonde nach Anspruch 1, **dadurch gekennzeichnet, dass** die Elektroden (12) des Korrosionssensors (4) zusammen eine Kreisfläche einnehmen.

9. Korrosionssonde nach Anspruch 1,
**dadurch gekennzeichnet, dass** die plattenförmigen Elektroden (12) die Form von Kreissektoren und/oder Kreissegmenten und/oder Kreisringabschnitten aufweisen.

10. Korrosionssonde nach Anspruch 1,
**dadurch gekennzeichnet, dass** unmittelbar benachbarte Elektroden (12) durch einen Spalt (22) voneinander getrennt sind.

11. Korrosionssonde nach Anspruch 1,
**dadurch gekennzeichnet, dass** jede der Elektroden an alle anderen Elektroden (12) unmittelbar angrenzt.

12. Korrosionssonde nach Anspruch 1, **dadurch gekennzeichnet, dass** die Elektroden (12) durch Keramik gegeneinander elektrisch isoliert sind.

13. Korrosionssonde nach Anspruch 1, **dadurch gekennzeichnet, dass** sie mehrere konzentrisch zueinander angeordneten Rohre (31, 32, 33) aufweist, die zu einer Lanze (10) gehören.

14. Korrosionssonde nach Anspruch 13, **dadurch gekennzeichnet, dass** in der Lanze (10) ein von Kühlmittel umströmter Kühlkörper (36) angeordnet ist.
